(19) Europäisches Patentamt European Patent Office Office européen des brevets

(11) **EP 4 216 191 A1**

(12) **EUROPEAN PATENT APPLICATION**

(43) Date of publication:
**26.07.2023   Bulletin 2023/30**

(21) Application number: **22152650.2**

(22) Date of filing: **21.01.2022**

(51) International Patent Classification (IPC):
$G08G\ 1/16^{(2006.01)}$    $B60W\ 30/095^{(2012.01)}$
$G05D\ 1/02^{(2020.01)}$    $B60W\ 60/00^{(2020.01)}$
$G05D\ 1/00^{(2006.01)}$    $G06N\ 3/02^{(2006.01)}$
$G06N\ 20/00^{(2019.01)}$

(52) Cooperative Patent Classification (CPC):
**G08G 1/166; B60W 30/0956; B60W 60/0011; B60W 60/00276; G06N 3/02; G06N 20/00; G08G 1/00;** G08G 1/167

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Continental Automotive Technologies GmbH**
**30165 Hannover (DE)**

(72) Inventor: **Reichardt, Jörg**
**90411 Nürnberg (DE)**

(74) Representative: **Continental Corporation**
**c/o Continental Automotive GmbH**
**Intellectual Property**
**Nordostpark 30**
**90411 Nürnberg (DE)**

(54) **COMPUTATIONALLY EFFICIENT TRAJECTORY REPRESENTATION FOR TRAFFIC PARTICIPANTS**

(57)    The present disclosure relates generally to autonomous vehicles, and more specifically to techniques for representing trajectories of objects such as traffic participants (e.g., vehicles, pedestrians, cyclists) in a computationally efficient manner (e.g., for multi-object tracking by autonomous vehicles). An exemplary method for generating a control signal for controlling a vehicle comprises: obtaining a parametric representation of a trajectory of a single object in the same environment as the vehicle; updating the parametric representation of the single-object trajectory based on data received by one or more sensors of the vehicle within a framework of multi-object and multi-hypothesis tracker; and generating the control signal for controlling the vehicle based on the updated trajectory of the object.

FIG. 2

**Description**

**FIELD OF INVENTION**

The present disclosure relates generally to autonomous vehicles, and more specifically to techniques for representing trajectories of objects such as traffic participants (e.g., vehicles, pedestrians, cyclists) in a computationally efficient manner (e.g., for multi-object tracking by autonomous vehicles).

**BACKGROUND**

Safe and comfortable operation of autonomous agents (e.g., vehicles including cars, drones, robots, farming equipment, etc.) necessitates anticipatory motion planning that takes into account the likely future dynamics of other agents and objects in the environment. Since the intentions of other agents are not generally perceivable to an outside observer, autonomous agents can only make inferences about the future behavior of their dynamic surroundings. Such inferences can only be based on observations of past and present motion in the context of the environment plus all signals other agents may actively send to indicate their intentions, such as turn indicators for example.

Thus, autonomous agents need to use their sensors to continuously track the motion of dynamic objects in their surroundings. Since there are generally several dynamic objects in the environment of an agent, this process is called multi-object tracking ("MOT"). Multi-object tracking entails a number of particular challenges: the number of objects to be tracked may change as objects leave and enter the field of observation of an agent; erroneous sensor readings may falsely indicate the presence of an object; or present object may yield no sensor reading due to temporary occlusions. Hence arises the problem of how to correctly associate sensor readings to tracked objects in order to update their current estimate of motion state, the so-called data association problem.

A principled solution to dealing with the uncertainty of data association is to simultaneously maintain a number of different consistent hypotheses of assigning sensor readings to tracked objects in what is called multi hypothesis tracking algorithms ("MHT"). Effectively, these allow to defer the final decision of data association to a later point in time when more conclusive evidence has been gathered (e.g. an occlusion has been resolved), while considering all likely alternatives in the meantime.

While MHT algorithms show superior tracking performance for MOT, they are computationally demanding due to the potentially very high number of association hypotheses to be kept. If applied in real time tracking systems on embedded hardware, MHT algorithms are thus currently limited to only maintaining estimates of the current kinematic state of objects such as current position, velocity, and acceleration.

However, it can be highly beneficial to not only track the current kinematic state of an object, but also part of its historical trajectory as it may carry valuable information about an agents intent. For example, a vehicle that has just completed a lane change is less likely to perform another lane change than another vehicle in the same kinematic state without this recent maneuver.

If MHT algorithms were to be used for trajectory tracking, the memory requirements would scale as M*L, the product of the number of hypotheses maintained (M) and the length of the trajectory (L), i.e. the number of time steps tracked. Further, for moving sensor applications one has to consider the computational cost of transforming all hypotheses considered for situation interpretation, prediction, and planning to the coordinate frame fixed to the sensor which scales as $L * m$, where m is the number of hypotheses applied for these tasks and $\leq$ M.

Consequently, it is desirable to generate and maintain a trajectory representation that reduces both memory requirements and computational requirements for coordinate transformations, as it would enable the use of MHT algorithms also for trajectory tracking.

**BRIEF SUMMARY**

The present disclosure is directed to methods, electronic devices, systems, apparatuses, and non-transitory storage media for generating control signals for autonomous vehicles and operating autonomous agents. Embodiments of the present disclosure can represent trajectories of traffic participants (e.g., the ego vehicle, other vehicles, pedestrians, cyclists, etc.) in a memory efficient and computationally efficient manner. In some embodiments, a trajectory of an object is represented as a parametric representation such as a Bezier curve. In some embodiments, a trajectory of an object is represented as a generalization of a Bezier curve, i.e. a linear combination of basis functions (e.g., first basis functions, second basis functions, third basis functions, etc.) that are learnt from data but maintains essential properties of Bezier curves that guarantee low memory footprint and computational efficiency of coordinate transformations.

Using parametric representations such as Bezier curves to represent traffic trajectories provides a number of technical advantages. For example, Bezier curves are well-suited for representing typical traffic trajectories (e.g., smooth driven trajectories) observed from autonomous agents. Further, historical trajectories together with the current state of the environment can provide rich information about other agents' intent and can significantly reduce uncertainties and simplify the planning process.

Further, the parametric representations require significantly less memory than naive trajectory representations. A naive trajectory representation includes a time sequence of kinematic states each defined by a plurality of kinematic state parameters (i.e., position, velocity, acceleration). Thus, in a multi-hypothesis approach, the computational cost scales both in memory and in computation as M*L, the product of the number of hypotheses maintained (M) and the length of the trajectory tracked (L) (e.g., number of time steps tracked) for an object. In contrast, a Bezier curve or its generalization is parameterized by a plurality of control points and thus can summarize the observed kinematic states over a time period of several seconds (e.g., tens to hundreds of timestamps/cycles) using a constant number of parameters (e.g., 8 for cubic Bezier curves, 12 for Quintic Bezier curves). Bezier curves bring down the computational cost of any trajectory tracking algorithm from scaling with the length of the tracked trajectory (L) to a constant. In other words, embodiments of the present invention can keep the scaling of a trajectory tracking algorithm comparable to that of only tracking the current state while at the same time providing rich temporal context. With this, reductions in memory footprint >95% can be achieved.

Further, the parametric representations of trajectories require significantly less computational resources than naive trajectory representations. For example, to obtain the Bezier curve representation seen from a different coordinate system (e.g., due to ego-vehicle movement), the system can translate and rotate the control points, i.e. the parameters of the curve, to obtain the exact representation of the curve in a computationally efficient manner. In some embodiments, the control points can be transformed using an affine transformation. In other words, they are transformed in the same way a static position of an environmental feature, such as a traffic sign, is transformed. This is in contrast to, for example, a polynomial representation in some coordinate frame which does not allow direct transformation of its parameters. If the trajectory of an object is fitted using a polynomial representation, ego motion compensation would be difficult because a polynomial in the coordinate frame of the ego vehicle does not remain a polynomial under rotation. Thus, the system would be limited to keeping a list of all measured points, compensate those for ego motion, and refit the points with a polynomial, which can be computationally expensive.

Further, the parametric representations can be updated in a computationally efficient manner. The motion model needed for the prediction step in a tracking algorithm is a time invariant linear transformation that only depends on the cycle time. When observing position, velocity, and acceleration of an object, the observation model is linear time invariant and thus the Kalman update equations for the parameters of the trajectory are exact. The parameters are fully interpretable. The standard kinematic state vector of an object along the trajectory (position, velocity, acceleration) can be recovered using a linear transform. There is no fitting of the data required, rather, the update step directly incorporates new observations into the parameters of the curve. Thus, the sequence of observations does not need to be stored in order to calculate a Bezier curve representation or its generalization.

As described herein, some embodiments of the present disclosure obtain multivariate Gaussian distributions over the control points of a Bezier Curve or its generalization together with an adapted motion model and measurement model as a direct drop-in in the Kalman update equations for the Gaussian distribution over kinematic state vectors used in state trackers. This would transform any state tracking algorithm into a trajectory tracking algorithm without the computational and memory cost of maintaining the sequence of states that form the trajectory. At the same time, no information is lost when compared to ordinary state tracking because the last point of the trajectory always corresponds to the current state of the object. Since Bezier curves can represent comfortable and smooth trajectories of limited jerk, deviations for actually measured object states can be used to detect anomalies in the behavior of other traffic participants. The compact Bezier representation is also uniquely suited as an input for AI algorithms (e.g., machine-learning models such as a neural network) for situation understanding in autonomous agents as they summarize the past behavior of agents in the context of the traffic scene.

An exemplary method for generating a control signal for controlling a vehicle comprises: obtaining a parametric representation of a trajectory of a single object in the same environment as the vehicle; updating the parametric representation of the single-object trajectory based on data received by one or more sensors of the vehicle within a framework of multi-object and multi-hypothesis tracker; and generating the control signal for controlling the vehicle based on the updated trajectory of the object.

In some embodiments, the control signal is generated based on the updated trajectory of the object and at least one other object in the same environment as the vehicle.

In some embodiments, the method further comprises providing the control signal to the vehicle for controlling motion of the vehicle.

In some embodiments, the method further comprises determining an intent associated with the object based on the updated trajectory, wherein the control signal is determined based on the intent.

In some embodiments, the intent comprises exiting a road, entering a road, changing lanes, crossing street, making a turn, or any combination thereof.

In some embodiments, the method further comprises inputting the updated trajectory into a trained machine-learning model to obtain an output, wherein the control signal is determined based on the output of the trained machine-learning model.

In some embodiments, the machine-learning model is a neural network.

In some embodiments, obtaining the parametric representation of the trajectory comprises retrieving, from a memory, a plurality of control points.

In some embodiments, the method further comprises transforming the obtained parametric representation to a new coordinate system based on movement of the vehicle.

In some embodiments, transforming the obtained parametric representation comprises transforming the plurality of control points of the parametric representation to the new coordinate system.

In some embodiments, updating the parametric representation comprises: predicting an expected parametric representation based on the obtained parametric representation and a motion model; comparing the expected parametric representation with the data received by the one or more sensors of the vehicle; and updating the parametric representation based on the comparison.

In some embodiments, predicting the expected parametric representation comprises determining a plurality of control points of the expected parametric representation.

In some embodiments, determining the plurality of control points of the expected parametric representation comprises obtaining the mean and/or the covariance of the plurality of control points of the expected parametric representation.

In some embodiments, the motion model is a linear model configured to shift the obtained parametric representation forward by a time period.

In some embodiments, the parametric representation is updated based on a Kalman filter algorithm.

In some embodiments, the method further comprises determining whether the object is abnormal based on the comparison.

In some embodiments, the data is a first data and the updated parametric representation is a first parametric curve representation, and the method further comprises: updating the obtained parametric representation of the trajectory based on a second data received by the one or more sensors of the vehicle to obtain a second updated parametric representation; and storing the first updated parametric representation and the second updated parametric representation as hypotheses associated with the object.

In some embodiments, the object is a traffic participant.

In some embodiments, an exemplary vehicle comprises: one or more processors; a memory; and one or more programs, wherein the one or more programs are stored in the memory and configured to be executed by the one or more processors, the one or more programs including instructions for: obtaining a parametric representation of a trajectory of a single object in the same environment as the vehicle; updating the parametric representation of the single-object trajectory based on data received by one or more sensors of the vehicle within a framework of multi-object and multi-hypothesis tracker; and generating the control signal for controlling the vehicle based on the updated trajectory of the object.

In some embodiments, an exemplary system for generating a control signal for controlling a vehicle comprises: one or more processors; a memory; and one or more programs, wherein the one or more programs are stored in the memory and configured to be executed by the one or more processors, the one or more programs including instructions for obtaining a parametric representation of a trajectory of a single object in the same environment as the vehicle; updating the parametric representation of the single-object trajectory based on data received by one or more sensors of the vehicle within a framework of multi-object and multi-hypothesis tracker; and generating the control signal for controlling the vehicle based on the updated trajectory of the object.

## DESCRIPTION OF THE FIGURES

For a better understanding of the various described embodiments, reference should be made to the Description of Embodiments below, in conjunction with the following drawings in which like reference numerals refer to corresponding parts throughout the figures.

FIG. 1A illustrates a scenario in which only the current states of two vehicles are known, in accordance with some embodiments.

FIG. 1B illustrates a scenario in which only the current states of two vehicles are known, in accordance with some embodiments.

FIG. 1C illustrates a scenario in which both the current states and historical trajectories of objects are known, in accordance with some embodiments.

FIG. 1D illustrates a scenario in which both the current states and historical trajectories of objects are known, in accordance with some embodiments.

FIG. 2 illustrates an exemplary process for generating a control signal for a vehicle, in accordance with some embodiments.

FIG. 3A illustrates an exemplary trajectory representation, in accordance with some embodiments.

FIG. 3B illustrates an exemplary trajectory representation, in accordance with some embodiments.

FIG. 4 illustrates an example of a computing device, in accordance with some embodiments.

## DETAILED DESCRIPTION

The following description is presented to enable a person of ordinary skill in the art to make and use the various embodiments. Descriptions of specific devices, techniques, and applications are provided only as examples. Various modifications to the examples described herein will be readily apparent to those of ordinary skill in the art, and the general principles defined herein may be applied to other examples and applications without departing from the spirit and scope of the various embodiments. Thus, the various embodiments are not intended to be limited to the examples described herein and shown, but are to be accorded the scope consistent with the claims.

The present disclosure is directed to methods, electronic devices, systems, apparatuses, and non-transitory storage media for generating control signals for autonomous vehicles and operating autonomous agents. Embodiments of the present disclosure can represent trajectories of traffic participants (e.g., the ego vehicle, other vehicles, pedestrians, cyclists, etc.) in a memory efficient and computationally efficient manner. In some embodiments, a trajectory of an object is represented as a parametric representation. The parametric representation can be a generalization of a Bezier curve, i.e. a linear combination of basis functions (e.g., first basis functions, second basis functions, third basis functions, etc.) that are learnt from data but maintains essential properties of Bezier curves that guarantee low memory footprint and computational efficiency of coordinate transformations.

Using parametric representations such as Bezier curves to represent traffic trajectories provides a number of technical advantages. For example, Bezier curves are well-suited for representing typical traffic trajectories (e.g., smooth driven trajectories) observed from autonomous agents. Further, historical trajectories together with the current state of the environment can provide rich information about other agents' intent and can significantly reduce uncertainties and simplify the planning process.

Further, the parametric representations require significantly less memory than naive trajectory representations. A naive trajectory representation includes a time sequence of kinematic states each defined by a plurality of kinematic state parameters (i.e., position, velocity, acceleration). Thus, in a multi-hypotheses approach, the computational cost scales both in memory and in computation as M*L, the product of the number of hypotheses maintained (M) and the length of the trajectory tracked (L) (e.g., number of time steps tracked) for an object. In contrast, a Bezier curve or its generalization is parameterized by a plurality of control points and thus can summarize the observed kinematic states over a time period of several seconds (e.g., tens to hundreds of timestamps/cycles) using a constant number of parameters (e.g., 8 for cubic Bezier curves, 12 for Quintic Bezier curves). Parametric representations bring down the computational cost of any trajectory tracking algorithm from scaling with the length of the tracked trajectory (L) to a constant. In other words, embodiments of the present invention can keep the scaling of tracking algorithm comparable to that of only tracking the current state while at the same time providing rich temporal context. With this, reductions in memory footprint >95% can be achieved.

Further, the parametric representations of trajectories require significantly less computational resources than naive trajectory representations. For example, to obtain the Bezier curve representation seen from a different coordinate system (e.g., due to ego-vehicle movement), the system can translate and rotate the control points, i.e. the parameters of the curve, to obtain the exact representation of the curve in a computationally efficient manner. In some embodiments, the control points can be transformed using an affine transformation. In other words, they are transformed in the same way a static position of an environmental feature, such as a traffic sign, is transformed. This is in contrast to, for example, a polynomial representation in some coordinate frame which does not allow direct transformation of its parameters. If the trajectory of an object is fitted using a polynomial representation, ego motion compensation would be difficult because a polynomial in the coordinate frame of the ego vehicle does not remain a polynomial under rotation. Thus, the system would be limited to keeping a list of all measured points, compensate those for ego motion, and refit the points with a polynomial, which can be computationally expensive.

Further, the parametric representations can be updated in a computationally efficient manner. The motion model needed for the prediction step in a tracking algorithms is a time invariant linear transformation that only depends on the cycle time. When observing position, velocity, and acceleration of an object, the observation model is linear time invariant and thus the Kalman update equations for the parameters of the trajectory are exact. The parameters are fully interpretable. The standard kinematic state vector of an object along the trajectory (position, velocity, acceleration) can be recovered using a linear transform. There is no fitting of the data required, rather, the update step directly incorporates new observations into the parameters of the curve. Thus, the sequence of observations does not need to be stored in order to calculate a Bezier curve representation or its generalization.

As described herein, some embodiments of the present disclosure obtain multivariate Gaussian distributions over the control points of a Bezier Curve or its generalization together with an adapted motion model and measurement model as a direct drop-in in the Kalman update equations for the Gaussian distribution over kinematic state vectors used in state trackers. This would transform any state tracking algorithm into a trajectory tracking algorithm without the computational and memory cost of maintaining the sequence of states that form the trajectory. At the same time, no information is lost when compared to ordinary state tracking as the last point of the trajectory always corresponds to the current state of the object. Since Bezier curves represent comfortable and smooth trajectories of limited jerk, deviations for actually measured object states can be used to detect anomalies in the behavior of other traffic participants. The compact Bezier representation is also uniquely suited as an input for AI algorithms for situation understanding in autonomous agents as they summarize the past behavior of agents in the context of the traffic scene.

The following description sets forth exemplary methods, parameters, and the like. It should be recognized, however, that such description is not intended as a limitation on the scope of the present disclosure but is instead provided as a description of exemplary embodiments.

Although the following description uses terms "first," "second," etc. to describe various elements, these elements should not be limited by the terms. These terms are only used to distinguish one element from another. For example, a first graphical representation could be termed a second graphical representation, and, similarly, a second graphical representation could be termed a first graphical representation, without departing from the scope of the various described embodiments. The first graphical representation and the second graphical representation are both graphical representations, but they are not the same graphical representation.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Safe and comfortable navigation of an autonomous vehicle necessitates anticipatory planning, i.e. the ability to form expectations and make predictions about the future behavior of dynamic objects in the environment. The basis for such predictions is an accurate estimate of the present state of dynamic objects based on past observations. Naturally, such state estimates are probabilistic due to uncertainties in the measurement process or unobservable quantities such as driver intent. State space models are uniquely suited for this task as they provide a solid probabilistic framework to sequentially absorb observations into estimates of the current state of dynamic objects and track their motion over time. The standard technique for this is the Kalman filter or any of its variants and extensions. Below the main operational steps of the Kalman filter, some of the weaknesses of this approach, and how it can be improved are described.

**Kalman Filtering Algorithms**

The probability distributions over the current state vector of a single object $\mathbf{x}_t$ given a sequence of all past observations of the object up to time t can be considered as $P(x_t \mid o_t, .. , o_0) \equiv P_{t|t}$. For example, an autonomous vehicle tracked in two dimensions is described by a typical state vector

$$\mathbf{x}_t$$

comprising 6 entries: x-position, $y$-position, velocity v, acceleration $a$, yaw angle $\psi$ and turn rate $\dot{\psi}$. In the simplest case, the probability density for this vector is a Gaussian distribution $P_{t|t} = N(\mathbf{x}_t; \mu_{t|t}, \Sigma_{t|t})$ with mean $\mu_{t|t}$ and convariance $\Sigma_{t|t}$.

Of interest are further distributions over future state vectors at time $t + \delta t$ given current state vectors $\mathbf{x}_t$ : $P(\mathbf{x}_{t+\delta t}|\mathbf{x}_t)$. Again, the simplest case is a Gaussian distribution $P(\mathbf{x}_{t+\delta t}|\mathbf{x}_t) = N(\mathbf{x}_{t+\delta t}; \hat{\mathbf{x}}_{t+\delta t}, Q(\delta t))$ with the mean being a linear function $\hat{\mathbf{x}}_{t+\delta t} = \mathbf{F}(\delta t)\mathbf{x}_t$ and covariance matrix $\mathbf{Q}(\delta t)$ and matrices $\mathbf{F}(\delta t)$ and $\mathbf{Q}(\delta t)$ only depending on $\delta t$.

Additionally, the likelihood of observations $\mathbf{o}_t$ for a given state vector $P(\mathbf{o}_t|\mathbf{x}_t)$ is considered. Again, the simplest case is a Gaussian distribution $P(\mathbf{o}_t|\mathbf{x}_t) = N(\mathbf{o}_t; \hat{\mathbf{o}}_t, R)$ with the mean being a linear function of the given state vector $\hat{\mathbf{o}}_t = Hx_t$ and covariance R. As an example, for the state vector described above, and a sensor that only returns position and velocity estimates, the matrix $\mathbf{H} \in \mathbb{R}^{3 \times 6}$ may be:

$$\mathbf{H} = \begin{pmatrix} 1 & 0 & 0 & 0 & 0 & 0 \\ 0 & 1 & 0 & 0 & 0 & 0 \\ 0 & 0 & 1 & 0 & 0 & 0 \end{pmatrix}$$

and the observation vector $\mathbf{o}_t$ would comprise of three entries: x-position, *y*-position and velocity v.

With these distributions at hand, the system can assimilate new observations sequentially from time $t + \delta t$ into refined estimates of the state vector $\mathbf{x}_{t+\delta t}$. This happens on the basis of all previously acquired information via the iteration of a prediction step and subsequent application of Bayes' Rule in an update step for each observation in a sequence:

$$P_{t+\delta t|t} \equiv P(\mathbf{x}_{t+\delta t}|\mathbf{o}_t, .., \mathbf{o}_0) = \int d\mathbf{x}_t P(\mathbf{x}_{t+\delta t}|\mathbf{x}_t) P_{t|t}$$

$$P_{t+\delta t|t+\delta t} \equiv P(\mathbf{x}_{t+\delta t}|\mathbf{o}_{t+\delta t}, .., \mathbf{o}_0) \propto P(\mathbf{o}_{t+\delta_t}|\mathbf{x}_{t+\delta t}) P_{t+\delta t|t}$$

Assuming Gaussian distributions for the parameter vectors and Gaussian likelihoods for observations together with linear motion and observation models, these equations can be solved in closed form and one obtains the standard Kalman filter equations for the prediction step $P_{t+\delta t|t} = N(\mathbf{x}_{t+\delta t}; \mu_{t+\delta t|t}, \Sigma_{t+\delta t|t})$ with:

$$\boldsymbol{\mu}_{t+\delta t|t} = \mathbf{F}(\delta t)\boldsymbol{\mu}_{t|t}$$

$$\boldsymbol{\Sigma}_{t+\delta t|t} = \mathbf{F}(\delta t)\boldsymbol{\Sigma}_{t|t}\mathbf{F}(\delta t)^T + \mathbf{Q}(\delta t)$$

The updated $P_{t+\delta t|t+\delta t} = N(\mathbf{x}_{t+\delta t}; \mu_{t+\delta t|t+\delta t}, \Sigma_{t+\delta t|t+\delta t})$ is then calculated as:

$$\mathbf{S} = \mathbf{H}\boldsymbol{\Sigma}_{t+\delta t|t}\mathbf{H}^T + \mathbf{R}$$

$$\mathbf{K} = \boldsymbol{\Sigma}_{t+\delta t|t}\mathbf{H}^T\mathbf{S}^{-1}$$

$$\boldsymbol{\mu}_{t+\delta t|t+\delta t} = \boldsymbol{\mu}_{t+\delta t|t} + \mathbf{K}\big(\mathbf{o}_{t+\delta t} - \mathbf{H}\boldsymbol{\mu}_{t+\delta t|t}\big)$$

$$\Sigma_{t+\delta t|t+\delta t} = (\mathbf{I} - \mathbf{KH})\Sigma_{t+\delta t|t}$$

Using these equations, the current state of a single object can be tracked efficiently from sequential observations.

If tracking is performed from a moving sensor as is the case for autonomous vehicles then the system has to compensate for sensor movement in a process called ego-compensation. The system can track an object in a fixed world coordinate system which requires transforming the observations from the coordinate system of the moving vehicle into a fixed coordinate system where prediction and update step are performed. Situation interpretation and planning, however, generally happen in the coordinate frame of the vehicle and so the system needs to transform the updated state estimates back to the vehicle coordinate system.

Preferably, tracking happens directly in the coordinate frame of the vehicle and thus the system needs to transform the state estimates to the current coordinate system of the vehicle in which measurements are taken. Updates can then be performed directly in the coordinate frame of the vehicle.

## Multi-object Tracking

The environment of autonomous vehicles can contain more than one dynamic object to be tracked with multi-object tracking algorithm (MOT). Consequently, sensors will return a set of detections for different objects. For example, radar sensors will return multiple detected objects based on radar reflections or multiple objects may be detected in camera images. Typical object detectors for radar reflections, camera images or LiDAR sensors work on a frame by frame basis, i.e. there is no established one-to-one correspondence of an object detection $i$ in a sensor reading at time $t$ to the state vector of object $i$ estimated on the basis of previous readings. Such direct correspondence in general cannot be established as objects enter and leave the range of sensors, and object detectors may produce false positive object detections or miss object detections due to occlusions or simple detector insufficiencies.

Let $\{o_t\}$ be the set of $k_t$ object detections at time t with $o_{t,i}$ representing detection $i$ at time t. The state estimate of a single object depends on the precise association of object detections to tracked objects in the update step of the Kalman equations. For example, considering the state of object $j$ at time $t = 3, P\left(\mathbf{x}_3^j | \mathbf{o}_{3,2}, \mathbf{o}_{2,0}, \mathbf{o}_{1,1}, \mathbf{o}_{0,0}\right)$ is different from $P\left(\mathbf{x}_3^j | \mathbf{o}_{3,1}, \mathbf{o}_{2,0}, \mathbf{o}_{1,2}, \mathbf{o}_{0,1}\right)$ because of different data association sequences.

Further, the data association sequences of different tracked objects must be consistent. If an object detection can only be associated with a single tracked object, then the data association sequences of different objects must be disjoint - a specific detection $o_{t,i}$ cannot occur in the association sequence of two different objects.

This consistency of data association is ensured in multi-object tracking algorithms prior to the update step. The ability to calculate the likelihood of every single object detection i to arise from a predicted state of any object $j$ as

$$P\left(\mathbf{o}_{t+\delta t} | \mathbf{x}_{t+\delta t}^j\right)$$

allows to select the most likely consistent associations of the set of $k_{t+\delta t}$ observations $\{o_{t+\delta t}\}$ to the currently tracked objects and proceed to the update step with those.

## Multi Hypothesis Tracking

However, it may be possible that at any time step there are several consistent data association possibilities of comparable likelihood. This ambiguity arises in particular in cluttered scenes with many occlusions as is typical for example in inner city traffic.

It is understood that the sequential association of observations into state estimates generally does not allow for the correction of errors in data association and thus choosing the wrong data associations poses the risk of potentially misestimating the current state of the environment and consequently not being able to plan a safe motion.

This risk can be mitigated by lifting the restriction of only working with a single consistent data association. Multi-hypothesis tracking (MHT) algorithms maintain a list of the top M most likely consistent data associations at each point in time and proceed with each of them independently in a branching process. In this way, data associations of similarly high likelihood and resulting estimates of the states of the dynamic environment are maintained until further observations have been gathered that resolve ambiguities.

A consistent data association for all tracked objects maintained in an MHT algorithm is called "global hypothesis". A data association sequence for a single tracked object and the resulting state estimate is called "local hypothesis". A global hypothesis thus includes a set of local hypotheses that are consistent. A single local hypothesis may appear in several global hypotheses as long as consistency is not violated. The number of global hypotheses maintained is typically in the hundreds and the number of local hypotheses is of the same order.

To reduce memory footprint, local hypotheses that are not part of any global hypotheses are pruned from memory.

## Difficulties with this approach

Though theoretically appealing, the approach outlined above has a few shortcomings that the present disclosure aims to address:

The choice of state vector x is generally motivated from prior knowledge about the kinematics of the tracked objects, e.g. for a vehicle one typically chooses as state variables position, velocity, acceleration, heading angle, and turn rate as already outlined. While intuitive, this state definition implies a non-linear motion model that necessitates to introduce approximations in the update equations. For example, the x-position at time $t + \delta t$ would have to be calculated

as $x_{t+\delta t} = x_t + \int_t^{t+\delta t} \cos(\psi_{t'}) v_{t'} dt'$ which is non-linear in the state variables. In fact, the most common extensions of the classical Kalman filter, so-called extended or unscented filters aim at allowing non-linear motion and observation models. Further, motion models often entail parameters that are not generally available to an observer. For example, in the vehicle model described, velocity v and turn rate $\dot{\psi}$ are connected via steering angle $\alpha$ and wheelbase

$$L \text{ via } \dot{\psi}_t = \frac{v_t}{L} \tan \alpha_t.$$

The deviations of actual object motion and motion model used are generally accounted for by the noise term **Q**, the so-called process noise. It is clear that model misspecification need to be accounted for with larger noise terms and thus makes estimates more uncertain.

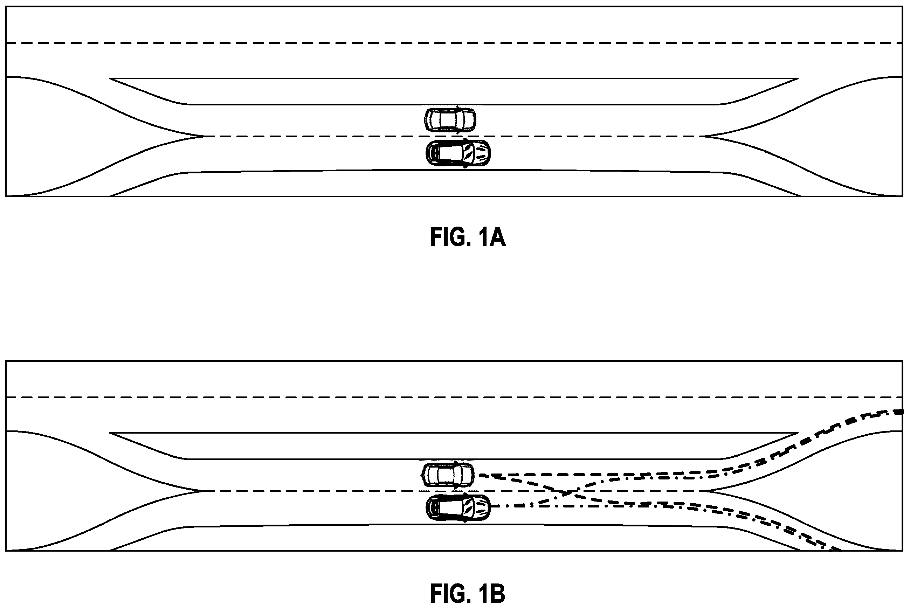

Further, such a definition of state vector is primarily aimed at exactly representing the current kinematic state of the vehicle and not at representing information from past observations that is relevant for predicting the future. For example, in the scenario in FIG. 1A, two vehicles are observed with their full kinematic state vector at the present state on a highway on-off ramp. However, this kinematic state does not contain information that reduces uncertainty about the future. For both vehicles, entering or exiting the highway appears equally likely and thus an observer travelling behind these two vehicles would have to contend with 4 equally probable future evolutions of the scene in front of it as shown in FIG. 1B.

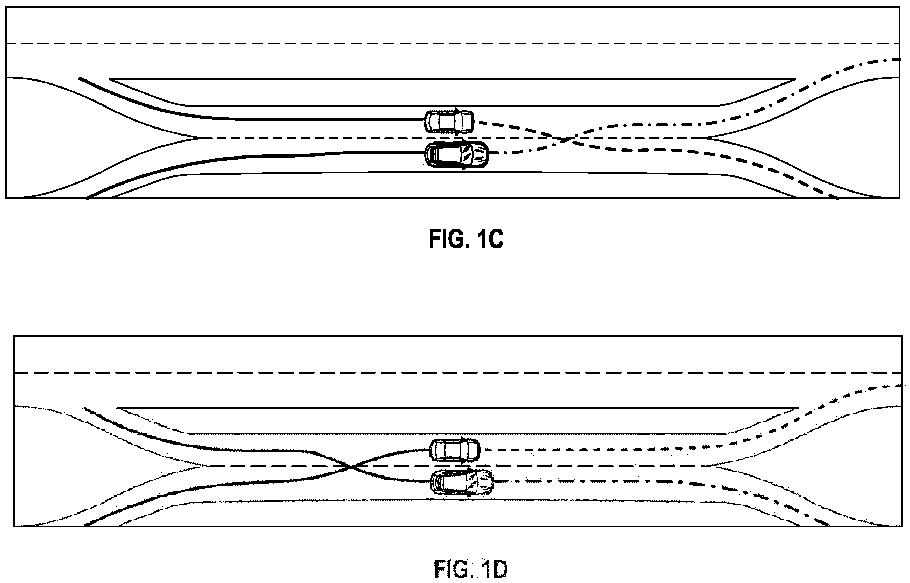

Since driver intent is generally unobservable, having the entire or at least part of the past trajectory of traffic participants available would make predictions about the future behavior of traffic participants less uncertain and thus facilitate planning. FIGS. 1C and 1D below illustrate this. With the past trajectories given, the uncertainty about the probable future evolution of the scene practically vanishes.

A naive approach to trajectory tracking would be to simply maintain a list of the last L estimates of the kinematic state of a dynamic object. If tracking is run at a frequency of 10Hz, then maintaining such a list for $\Delta T$ seconds would need hold $L = 10\Delta T$ state vectors. The memory footprint thus scales linearly with L for every tracked object in multi-object tracking or for every tracked local hypothesis in multi-hypothesis tracking. See Granström et al (https://arxiv.org/abs/1912.08718, Table I) for a discussion of computational requirements in state of the art implementations of MHT trackers.

Further, if tracking is to be performed in the coordinate frame of the vehicle, then a naive list of L historic states as trajectory would require ego-compensation of every single time point which is computationally expensive.

The present disclosure includes embodiments directed to using an object's past trajectory over L time steps as its state. But instead of using a list, the system uses a parametric representation for this trajectory with small memory footprint independent of $L$ and a corresponding linear motion and observation models that allow estimation of the parameters of this representation using Kalman update equations without the need for approximations. The small memory footprint makes trajectory tracking possible to be used in conjunction with multi-object tracking algorithms in realtime capable systems run on embedded hardware.

Further, the ego compensation in this representation is computationally very cheap as only the parameters need to be transformed and thus the computational effort does not depend on the length of the trajectory tracked.

Irrespective of whether one is tracking a single or multiple objects and whether one is tracking a single or multiple data association hypotheses, the core of every tracking algorithm that follows the paradigm of sequential Bayesian data assimilation is similar. One needs a state representation, a motion model that propagates the state forward in time and an observation model that allows to assess the likelihood of observations for a given state estimate. Described below are the mathematical details of the proposed representation for trajectories in d dimensions based on n+1 basis functions, a corresponding motion model and observation model.

The system considers n+1 trajectory basis functions of time $\Phi_i(t)$ arranged in an n+1 dimensional vector $\Phi(t)$ = $[\Phi_0(t), \Phi_1(t), \Phi_2(t), ..., \Phi_n(t)]$.

The system now defines an (n+1) × d dimensional matrix **P** of control points. Each row in **P** corresponds to one control point in d dimensions. The control points are the parameters of a trajectory and we find the position along the trajectory parameterized through **P** at time t as c(t) = $\Phi^T(t)P$ where **c**(t) is a d dimensional vector. The superscript T denotes transposition as usual. It is clear that **P** fully specifies c(t) for all t and we thus only need to estimate and track **P** if we want to track **c**(t).

Ego motion compensation of this trajectory is obtained by only transforming the control points that trivially transform under sensor translation and rotation as any fixed point in space.

The motion model for **P** is obtained as a time invariant linear transform that can be calculated directly from the basis functions.

The observation model is obtained in the following way: sensors for dynamic objects are generally able to obtain positional information as well as time derivative information such as velocities. Due to our chosen representation, the $j^{th}$ time-derivative of the trajectory is given as a linear transform of our control points $d^j/dt^j$ **c**(t) = $H_jP$ with $H_j = d^j/dt^j \Phi^T(t)$.

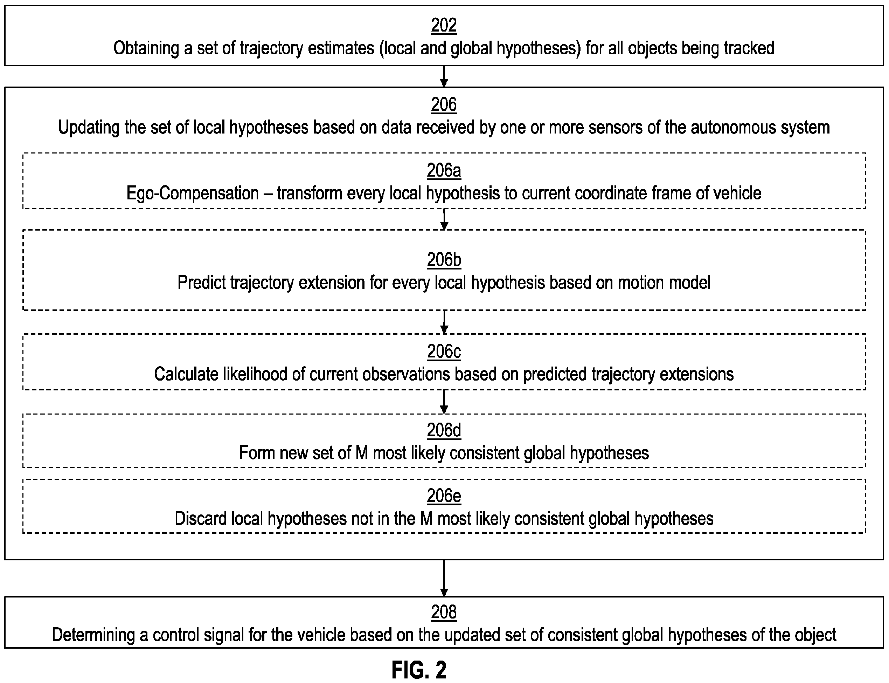

FIG. 2 illustrates an exemplary process for generating a control signal for a vehicle, in accordance with some embodiments. Process 200 is performed, for example, using one or more electronic devices implementing a software platform. In some examples, process 200 is performed using one or more electronic devices on an autonomous vehicle (e.g., the ego vehicle). In some embodiments, process 200 is performed using a client-server system, and the blocks of process 200 are divided up in any manner between the server and one or more client devices. Thus, while portions of process 200 are described herein as being performed by particular devices, it will be appreciated that process 200 is not so limited. In process 200, some blocks are, optionally, combined, the order of some blocks is, optionally, changed, and some blocks are, optionally, omitted. In some examples, additional steps may be performed in combination with the process 200. Accordingly, the operations as illustrated (and described in greater detail below) are exemplary by nature and, as such, should not be viewed as limiting.

At block 202, (e.g., one or more electronic devices) obtains a set of estimates of a parametric trajectory representations of objects. The objects can be traffic participants in the same environment as the vehicle and can be a vehicle, a pedestrian, a cyclist, a drone, an animal, etc.

A parametric trajectory representation in $d$ dimensions comprises of $n + 1$ basis functions of time and $n + 1$ control points in $d$ dimensions. The $n + 1$ basis functions of time $\tau$ arranged in an $n + 1$ dimensional vector:

$$\mathbf{\Phi}(\tau) = \begin{bmatrix} \phi_0(\tau) & \phi_1(\tau) & \phi_2(\tau) & \cdots & \phi_n(\tau) \end{bmatrix}$$

The system aims to represent trajectories of length $\Delta T$ by the interval $\tau \in [0,1]$, which is always possible for any $\Delta T$ by rescaling $d\tau = dt/\Delta T$.

At any moment in time $t$, a point along the past trajectory of an object in $d$ dimensions over a timespan of $\Delta T$ is then given by a linear combination of the $n + 1$ basis functions and the $n + 1$ current control points in $d$ dimensions arranged in an $(n + 1) \times d$ matrix $\mathbf{P}_t$ where each row corresponds to one control point:

$$\mathbf{c}(\tau) = \mathbf{\Phi}^T(\tau)\mathbf{P}_t$$

Here $\mathbf{c}(\tau) \in \mathbb{R}^d$ is a point along the tracked trajectory with $\tau = 0$ corresponding $t - \Delta T$ and $\tau = 1$ corresponding to the current time t. The control points of $\mathbf{P}_t$ are the parameters of the curve that change in time as the object moves. They transform under movement of the coordinate system in the same way as points in space and hence control points is a fitting name.

An example choice for such basis functions are the Bernstein Polynomials

$$\phi_i(\tau) = \binom{n}{i} \tau^i (1 - \tau)^{(n-i)}$$

In this case, the curves $\mathbf{c}(\tau)$ are known as Bezier curves and the control points $\mathbf{P}_t$ have a particularly intuitive interpretation. We will make reference to this special case as a running example. However, it should be understood by one of ordinary skill in the art that all statements are applicable for general basis functions. In particular, it is possible to optimize basis functions for the accurate representation of empirically measured trajectories.

In order to be able to use this trajectory representation in a Kalman filter and to be able to specify distributions over the parameters of the trajectory, the vector $\mathbf{x}_t \in \mathbb{R}^{(n+1)d}$ is introduced as state representation at time t. $\mathbf{x}_t$ is simply formed by concatenating the entries of the $(n+1) \times d$ matrix of control points $\mathbf{P}_t$, the first 2 entries corresponding to $p_o$, the second two entries corresponding to $p_1$ and so forth. It can be assumed that distributions over this state are modelled via a multivariate Gaussian distribution in $\mathbb{R}^{(n+1)d}$ with mean $\mu t$ and covariance $\Sigma t$. Due to the equivalence of $\mathbf{P}_t$ and $\mathbf{x}_t$ the following description uses whichever notation is most convenient at the time.

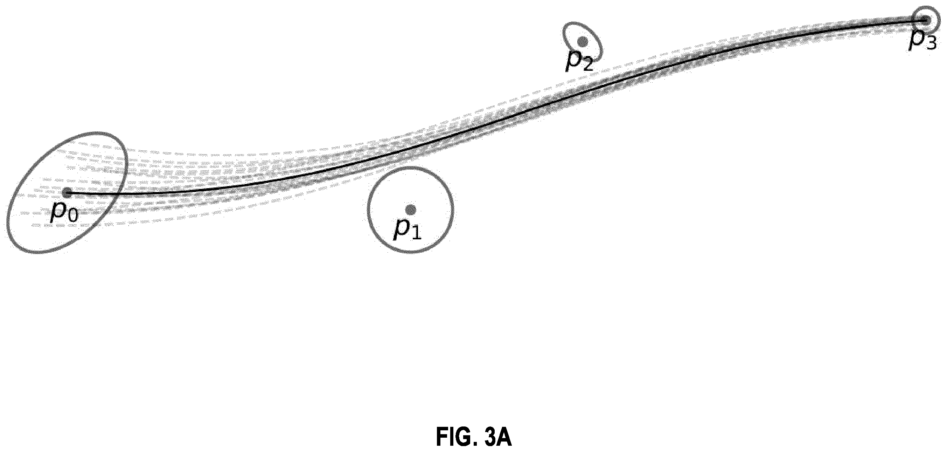

FIG. 3A illustrates an example using a cubic Bezier curve in 2 dimensions (i.e., $n = 3$ and $d = 2$). A cubic Bezier curve is parameterized by 4 control points: $p_1$, $p_2$, and $p_3$. Each control point is a 2-dimensional point represented by 2 values. The state vector $\mathbf{x}_t$ of such a trajectory is of size $(n + 1)d = 8$. In the figure, the probabilistic aspects are also indicated. The annotated points and corresponding ellipses denote the mean $\mu_t$ and 95% confidence intervals of the entries in $\mathbf{x}_t$ corresponding to the control points. The solid line denotes the mean estimate of the trajectory $\hat{\mathbf{c}}(\tau) = (\Phi^T(\tau) \otimes \mathbf{I}_2)\mu_t$ and the dashed lines correspond to sample trajectories $\mathbf{c}(\tau) = (\Phi^T(\tau) \otimes \mathbf{I}_2)\mathbf{x}_t$ with $\mathbf{x}_t$ sampled from a multivariate Gaussian distribution with mean $\mu_t$ and covariance $\Sigma t$.

Block 206 then performs the data assimilation step by updating the set of local hypotheses based on data received by one or more sensors of the autonomous system. At block 206a ego compensation is performed. For the parametric trajectory representation, only the control points, i.e. the state vector, needs to be transformed. This requires a much smaller computational effort than transforming a list of kinematic state vectors. Since this is a linear transformation, we can directly apply it to the parameters of the state density. Assuming the frame of reference is translated by a d-dimensional vector $\Delta o$ and rotated through the action of an $d \times d$ matrix $\mathbf{R}$ the system can first transform the covariance matrix of our state density. The covariance matrix is only affected by the rotation $\mathbf{R}$:

$$\Sigma_t \leftarrow (I_n \otimes R)\Sigma_t(I_n \otimes R)^T$$

The mean of the state density is first converted to homogeneous coordinates, i.e. we introduce an additional dimension to the control points that is constant and equal to one. The homogenized mean vector is calculated as

$$\mu^h = \left[\mu_1, \cdots \mu_d, 1, \mu_{d+1}, \cdots \mu_{2d}, 1, \cdots, \mu_{nd}, \cdots \mu_{(n+1)d}, 1\right]$$

Then, we introduce the d $\times$ (d + 1) matrix

$$T = \begin{bmatrix} R & -R\Delta o \end{bmatrix}$$

and can transform the mean vector as $\mu_t = (I_n \otimes T)\mu_t^h$. As before, $\mathbf{I_n}$ is an n $\times$ n unit matrix.

At block 206b, trajectory extensions are predicted using a specific motion model for the control points of the trajectory.

Assume at time $t$, the system has $m > n + 1$ samples of a trajectory $\mathbf{c}(\tau_i)$ along a trajectory at different times $\tau_i$, $i \in \{1, .. , m\}$ between $\tau_0 = 0$ and $\tau_m = 1$. These samples can be arranged as the rows of an $m$ x d matrix $\mathbf{C}$. An $m \times (n$

+ 1) matrix **B** can be formed so that row i of **B** corresponds to $\Phi(\tau_i)$. Then, the control points can be estimated as least square fit to the samples of the trajectory samples:

$$\mathbf{P}_t = (\mathbf{B}^T\mathbf{B})^{-1}\mathbf{B}^T\mathbf{C}$$

We are now interested in the motion model of the control points, i.e. under a move along the trajectory. For this, another $m \times (n + 1)$ matrix **B'** can be formed so that row $i$ of **B'** corresponds to $\Phi(\tau_i + \delta_t/\Delta T)$. The system can then obtain the transformed control points:

$$\mathbf{P}_{t+\delta t} = \underbrace{(\mathbf{B}^T\mathbf{B})^{-1}\mathbf{B}^T\mathbf{B}'}_{\mathbf{F}(\delta t)}\mathbf{P}_t$$

and thus have a linear motion model $\mathbf{F}(\delta t)$ for the control points that only depends on the choice of basis functions. Correspondingly for the state vector, the system can find:

$$\mathbf{P}_{t+\delta t} = \mathbf{F}(\delta t)\mathbf{P}_t$$
$$\hat{\mathbf{x}}_{t+\delta t} = (\mathbf{F}(\delta t) \otimes \mathbf{I}_d)\mathbf{x}_t$$

where $\mathbf{I}_d$ is the identity matrix in $d$ dimensions.

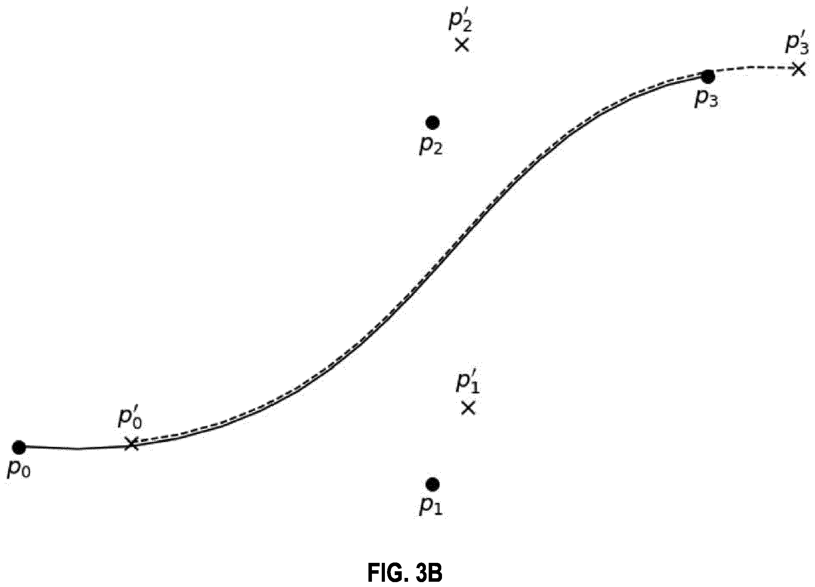

In particular, the end point of the moved trajectory will be $\mathbf{c}(1) = \Phi^T(1)P_{t+\delta t}$. FIG. 3B illustrates this for the running example of a cubic Bezier curve.

Matrix $P_t$, i.e. control points $\mathbf{P}_0$, $\mathbf{P}_1$, $\mathbf{P}_2$, and $\mathbf{P}_3$ parameterizing the trajectory at time t are propagated to the matrix $\mathbf{P}_{t+\delta t}$, i.e. control points $\mathbf{P}_0'$, $\mathbf{P}_1'$, $\mathbf{P}_2'$, and, $\mathbf{P}_3'$ parameterizing the trajectory at time $t + \delta_t$. By construction, the new trajectory estimate follows the old estimate exactly up to time $t$.

The prediction step in the Kalman filter equations is then written as

$$\boldsymbol{\mu}_{t+\delta t|t} = (\mathbf{F}(\delta t) \otimes \mathbf{I}_d)\boldsymbol{\mu}_{t|t}$$

$$\boldsymbol{\Sigma}_{t+\delta t|t} = (\mathbf{F}(\delta t) \otimes \mathbf{I}_d)\boldsymbol{\Sigma}_{t|t}(\mathbf{F}(\delta t) \otimes \mathbf{I}_d)^T + \mathbf{Q}(\delta t)$$

At block 206d, the likelihood of current sensor readings based on the set of predicted trajectory extensions for the local hypotheses. Typical object detectors provide measurements of object positions, velocities and possibly accelerations. These kinds of kinematic measurements are easily obtained. The $i$-th derivative is simply:

$$\frac{d^i}{dt^i}\mathbf{c}(t)\Big|_{t'} = \frac{1}{\Delta T^i}\frac{d^i}{d\tau^i}\Phi(\tau)\Big|_{\tau=t'/\Delta T}\mathbf{P}$$

For trajectory tracking, the natural choice is to consider the most recent, i.e. last, point of the trajectory at $\tau = 1$.

Depending on the sensory information available for each object, we can then form an observation matrix H.

For example, if the system is tracking the trajectory of an object in 2D and the sensors provide with position and respective velocities, form an observation vector $\mathbf{o}_t = [x, y, v_x, v_y]$. We then form the $2 \times (n + 1)$ matrix $H_o$ with rows $\Phi(1)$ and $\frac{1}{\Delta T} \frac{d}{d\tau} \Phi(\tau)\big|_{\tau=1}$ and obtain the matrix H necessary for the update step of the Kalman equations from above:

$$\mathbf{H} = \mathbf{H}_o \otimes \mathbf{I}_2$$

With this, the system has all necessary parts in order to be able to track the trajectory of an objects over time horizon $\Delta T$ by always updating the trajectory with the most recent observation.

At block 206d, the M most likely global hypotheses are formed based on the likelihood of the current sensor readings calculated in the previous step.

At block 206e, all local hypotheses not used in the M most likely global hypotheses are pruned from memory.

Process 206d then returns the set of the M most likely global hypotheses and the corresponding local hypotheses for further processing in block 208.

At block 208, the system determines a control signal for the vehicle based on the updated trajectory of the object. In some embodiments, the system can determine an intent associated with the object based on the updated trajectory of the object and determine a control signal for the vehicle accordingly. For example, as discussed with reference to FIGS. 1A-D, historical trajectories can be used to determine intent of a traffic participant (e.g., exiting highway, entering highway, crossing the street, making a turn). Based on the intent associated with the object, the system can determine a control signal for the vehicle to avoid collision with the object. The control signal can be provided or transmitted to the vehicle to control the vehicle (e.g., maintaining speed, accelerating, decelerating, changing direction, etc.).

In some embodiments, the system can use the updated trajectory for various downstream analyses. For example, the system can input the updated trajectory into a machine-learning model for situation understanding. For example, the machine-learning model can be configured to receive a trajectory of an object and identify an intent of the object, identify abnormal behaviors, predict the future trajectory, etc. The compact parametric representations are uniquely suited for AI algorithms for situation understanding in autonomous vehicles as they summarize the past behavior of traffic participants in the context of the traffic scene. Due to the compactness of the Bezier representations, a compact machine-learning model can be trained in a computationally efficient manner and the trained model can provide fast analyses. The machine-learning models described herein include any computer algorithms that improve automatically through experience and by the use of data. The machine-learning models can include supervised models, unsupervised models, semi-supervised models, self-supervised models, etc. Exemplary machine-learning models include but are not limited to: linear regression, logistic regression, decision tree, SVM, naive Bayes, neural networks, K-Means, random forest, dimensionality reduction algorithms, gradient boosting algorithms, etc.

In some embodiments, the system stores multiple hypotheses for the object as discussed above. Each hypothesis for the object includes a Bezier curve representation (e.g., the control points parameterizing the curve). Thus, the updated Bezier curve representation can be stored as one of many hypotheses associated with the object.

In some embodiments, the system evaluates the updated trajectory of the object to determine if the object is behaving in an abnormal manner. Because Bezier curves are smooth curves and represent typical driving trajectories (e.g., comfortable and smooth trajectories with limited jerk) well, deviations for actually measured object states can be used to detect anomalies in the behavior of other traffic participants. In some embodiments, the system determines a deviation between the expected curve (e.g., as obtained in block 206b) and the actual observed trajectory and compares the deviation to a predefined threshold. If the threshold is exceeded, the system can determine that the object is exhibiting abnormal behavior (e.g., reckless driving). Based on the detected anomalies, the system can generate a control signal (e.g., to stay away from an abnormal object).

While the techniques described with reference to process 200 are directed to using Bezier curves to represent trajectories of traffic participants other than the ego vehicle, the techniques can be applied to track the trajectory of the ego vehicle itself using a Bezier curve representation. Further, while the techniques described with reference to process 200 involve the use of Bezier curves, it should be understood that the Bezier curve representations can be replaced by any linear combination of basis functions (e.g., first basis functions, second basis functions, third basis functions, etc.). In some embodiments, machine learning models such as neural networks or Gaussian Processes may be used to calculate the basis functions.

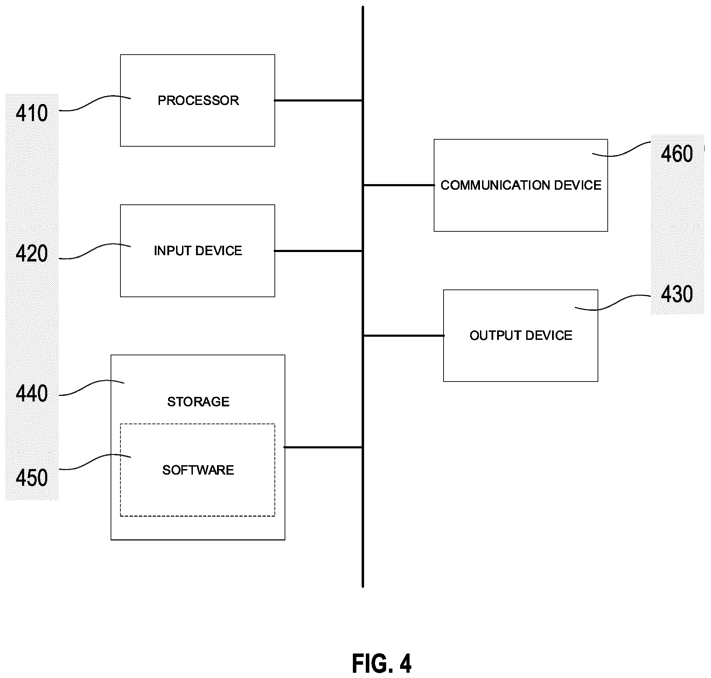

The operations described herein are optionally implemented by components depicted in FIG. 4. FIG. 4 illustrates an example of a computing device in accordance with one embodiment. Device 400 can be a host computer connected to a network. Device 400 can be a client computer or a server. As shown in FIG. 4, device 400 can be any suitable type of microprocessor-based device, such as a personal computer, workstation, server or handheld computing device (portable electronic device) such as a phone or tablet. The device can include, for example, one or more of processor 410, input device 420, output device 430, storage 440, and communication device 460. Input device 420 and output device 430 can generally correspond to those described above, and can either be connectable or integrated with the computer.

Input device 420 can be any suitable device that provides input, such as a touch screen, keyboard or keypad, mouse, or voice-recognition device. Output device 430 can be any suitable device that provides output, such as a touch screen, haptics device, or speaker.

Storage 440 can be any suitable device that provides storage, such as an electrical, magnetic or optical memory including a RAM, cache, hard drive, or removable storage disk. Communication device 460 can include any suitable device capable of transmitting and receiving signals over a network, such as a network interface chip or device. The components of the computer can be connected in any suitable manner, such as via a physical bus or wirelessly.

Software 450, which can be stored in storage 440 and executed by processor 410, can include, for example, the programming that embodies the functionality of the present disclosure (e.g., as embodied in the devices as described above).

Software 450 can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 440, that can contain or store programming for use by or in connection with an instruction execution system, apparatus, or device.

Software 450 can also be propagated within any transport medium for use by or in connection with an instruction execution system, apparatus, or device, such as those described above, that can fetch instructions associated with the software from the instruction execution system, apparatus, or device and execute the instructions. In the context of this disclosure, a transport medium can be any medium that can communicate, propagate or transport programming for use by or in connection with an instruction execution system, apparatus, or device. The transport readable medium can include, but is not limited to, an electronic, magnetic, optical, electromagnetic or infrared wired or wireless propagation medium.

Device 400 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

Device 400 can implement any operating system suitable for operating on the network. Software 450 can be written in any suitable programming language, such as C, C++, Java or Python. In various embodiments, application software embodying the functionality of the present disclosure can be deployed in different configurations, such as in a client/server arrangement or through a Web browser as a Web-based application or Web service, for example.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

**Claims**

1. A method for generating a control signal for controlling a vehicle, comprising:

    obtaining a parametric representation of a trajectory of a single object in the same environment as the vehicle;
    updating the parametric representation of the single-object trajectory based on data received by one or more sensors of the vehicle within a framework of multi-object and multi-hypothesis tracker; and
    generating the control signal for controlling the vehicle based on the updated trajectory of the object.

2. The method of claim 1, wherein the control signal is generated based on the updated trajectory of the object and at least one other object in the same environment as the vehicle.

3. The method of claim 1 or 2, further comprising: providing the control signal to the vehicle for controlling motion of the vehicle.

4. The method of claim 1,2 or 3, further comprising: determining an intent associated with the object based on the updated trajectory, wherein the control signal is determined based on the intent.

5. The method of claim 4, wherein the intent comprises exiting a road, entering a road, changing lanes, crossing street, making a turn, or any combination thereof.

6. The method of any one of the preceding claims, further comprising: inputting the updated trajectory into a trained machine-learning model to obtain an output, wherein the control signal is determined based on the output of the trained machine-learning model.

7. The method of claim 6, wherein the machine-learning model is a neural network.

8. The method of any one of the preceding claims, wherein obtaining the parametric representation of the trajectory comprises retrieving, from a memory, a plurality of control points.

9. The method of claim 8, further comprising: transforming the obtained parametric representation to a new coordinate system based on movement of the vehicle.

10. The method of claim 9, wherein transforming the obtained parametric representation comprises transforming the plurality of control points of the parametric representation to the new coordinate system.

11. The method of any one of the preceding claims, wherein updating the parametric representation comprises:

predicting an expected parametric representation based on the obtained parametric representation and a motion model;
comparing the expected parametric representation with the data received by the one or more sensors of the vehicle; and
updating the parametric representation based on the comparison.

12. The method of claim 11, wherein predicting the expected parametric representation comprises determining a plurality of control points of the expected parametric representation.

13. The method of claim 12, wherein determining the plurality of control points of the expected parametric representation comprises obtaining the mean and/or the covariance of the plurality of control points of the expected parametric representation.

14. The method of one of the claims 11 to 13, wherein the motion model is a linear model configured to shift the obtained parametric representation forward by a time period.

15. The method of one of the claims 11 to 14, wherein the parametric representation is updated based on a Kalman filter algorithm.

16. The method of one of the claims 11 to 15, further comprising: determining whether the object is abnormal based on the comparison.

17. The method of any one of the preceding claims, wherein the data is a first data and the updated parametric representation is a first parametric curve representation, further comprising:

updating the obtained parametric representation of the trajectory based on a second data received by the one or more sensors of the vehicle to obtain a second updated parametric representation; and
storing the first updated parametric representation and the second updated parametric representation as hypotheses associated with the object.

**18.** The method of any one of the preceding claims, wherein the object is a traffic participant.

**19.** A vehicle, comprising:

one or more processors;
a memory; and
one or more programs, wherein the one or more programs are stored in the memory and configured to be executed by the one or more processors, the one or more programs including instructions for:

obtaining a parametric representation of a trajectory of a single object in the same environment as the vehicle;
updating the parametric representation of the single-object trajectory based on data received by one or more sensors of the vehicle within a framework of multi-object and multi-hypothesis tracker; and
generating the control signal for controlling the vehicle based on the updated trajectory of the object.

**20.** A system for generating a control signal for controlling a vehicle, comprising:

one or more processors;
a memory; and
one or more programs, wherein the one or more programs are stored in the memory and configured to be executed by the one or more processors, the one or more programs including instructions for:

obtaining a parametric representation of a trajectory of a single object in the same environment as the vehicle;
updating the parametric representation of the single-object trajectory based on data received by one or more sensors of the vehicle within a framework of multi-object and multi-hypothesis tracker; and
generating the control signal for controlling the vehicle based on the updated trajectory of the object.

FIG. 1A

FIG. 1B

FIG. 1C

FIG. 1D

**202**
Obtaining a set of trajectory estimates (local and global hypotheses) for all objects being tracked

**206**
Updating the set of local hypotheses based on data received by one or more sensors of the autonomous system

**206a**
Ego-Compensation – transform every local hypothesis to current coordinate frame of vehicle

**206b**
Predict trajectory extension for every local hypothesis based on motion model

**206c**
Calculate likelihood of current observations based on predicted trajectory extensions

**206d**
Form new set of M most likely consistent global hypotheses

**206e**
Discard local hypotheses not in the M most likely consistent global hypotheses

**208**
Determining a control signal for the vehicle based on the updated set of consistent global hypotheses of the object

**FIG. 2**

FIG. 3A

**FIG. 3B**

EP 4 216 191 A1

FIG. 4

460 — COMMUNICATION DEVICE
430 — OUTPUT DEVICE
410 — PROCESSOR
420 — INPUT DEVICE
440 — STORAGE
450 — SOFTWARE

Europäisches Patentamt
European Patent Office
Office européen des brevets

# EUROPEAN SEARCH REPORT

Application Number

EP 22 15 2650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/367021 A1 (ZHAO YUE [US] ET AL) 5 December 2019 (2019-12-05) * paragraphs [0003], [0039], [0044] – [0056], [0060], [0072] – [0075], [0079], [0080], [0095], [0099] – [0112] * * paragraphs [0168], [0180], [0199], [0252], [0266] – [0281], [0289] – [0305], [0321] – [0326], [0330], [0359] * * figures 3-5, 9, 17, 21, 22 * | 1-20 | INV. G08G1/16 B60W30/095 G05D1/02 B60W60/00 G05D1/00 G06N3/02 G06N20/00 |
| Y | US 11 195 418 B1 (HONG XI JOEY [US] ET AL) 7 December 2021 (2021-12-07) * the whole document * & US 2022/092983 A1 (HONG XI JOEY [US] ET AL) 24 March 2022 (2022-03-24) * paragraphs [0017] – [0019], [0022], [0024], [0027], [0061], [0072] – [0074], [0085], [0098], [0106], [0200] * * figures 1, 3, 6, 10 * | 1-20 | |
| A | US 2018/348767 A1 (JAFARI TAFTI SAYYED ROUHOLLAH [US] ET AL) 6 December 2018 (2018-12-06) * paragraphs [0004], [0005], [0007] – [0012], [0016], [0018], [0023], [0066], [0067] * * figures 4-10 * | 1-20 | TECHNICAL FIELDS SEARCHED (IPC) G08G B60W G05D G06N |

The present search report has been drawn up for all claims

| Place of search | Date of completion of the search | Examiner |
|---|---|---|
| The Hague | 8 July 2022 | Roxer, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 2650

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2022

| Patent document cited in search report | | Publication date | Patent family member(s) | | Publication date |
|---|---|---|---|---|---|
| US 2019367021 | A1 | 05-12-2019 | NONE | | |
| US 11195418 | B1 | 07-12-2021 | US 11195418 B1 | | 07-12-2021 |
| | | | US 2022092983 A1 | | 24-03-2022 |
| US 2018348767 | A1 | 06-12-2018 | CN 108981722 A | | 11-12-2018 |
| | | | DE 102018113007 A1 | | 06-12-2018 |
| | | | US 2018348767 A1 | | 06-12-2018 |

EPO FORM P0459

For more details about this annex : see Official Journal of the European Patent Office, No. 12/82